# EUROPEAN PATENT APPLICATION

(11) **EP 2 242 252 A2**
(43) Date of publication of application: **20.10.2010**
(21) Application number: 10154579.6
(22) Date of filing: 24.02.2010
(51) Int. Cl.: H04N 5/232, G06T 3/40

(54) **In-camera generation of high quality composite panoramic images**

(30) Priority: 17.04.2009 US 426085
(71) Applicant: Sony Corporation, Minato-ku Tokyo 108-0075 (JP); Sony Electronics Inc., Park Ridge, NJ 07656 (US)
(72) Inventor: Liu, Ming-Chang, San Jose, CA 95130 (US); Robertson, Mark, Cupertino, CA 95014 (US)
(74) Representative: DeVile, Jonathan Mark

(57) **Abstract**

Apparatus and method for automatically generating panoramic still photographs from a sequence of images collected during panning. Programming within the camera mallows creating the panoramic image output from multiple captured stills and/or video frames without laborious user "stitching". A sequence of images are captured under control of the camera which span a desired subject area being panned (in any direction) by the user. As the images are being captured, the programming assures that the edges of adjacent images in the sequence sufficiently overlap one another as the desired subject area is being panned, as well as controlling other necessary camera adjustments (e.g., maintaining fixed focus). A set of sequential overlapping image frames is collected and combined to create at least one panoramic still photograph. The user can preferably change settings to control how the images are put together into the panoramic image output.

## Description

A portion of the material in this patent document is subject to copyright protection under the copyright laws of the United States and of other countries. The owner of the copyright rights has no objection to the facsimile reproduction by anyone of the patent document or the patent disclosure, as it appears in the United States Patent and Trademark Office publicly available file or records, but otherwise reserves all copyright rights whatsoever.

### BACKGROUND OF THE INVENTION

### 1. Field of the Invention

This invention pertains generally to camera devices, and more particularly to automatic generation of panoramic images.

### 2. Description of Related Art

Panoramic photography provides image capture with elongated fields of view, and is sometimes referred to as wide format. In one sense an image that presents a field of view which approaches or is greater than that of the human eye, which is about 160° by 75°, can be termed panoramic. Although the term "panoramic" can be generally used for various forms of wide (or long) format images, including those cropped to a wide or long format, the discussion herein uses the term to mean photos which are extended in one or more directions (e.g., horizontally or vertically) beyond that captured by the image sensor.

Although cameras have been available which utilize multiple lenses and shutters, it will be appreciated that these are expensive, bulky and are not readily available to even professional photographers, and certainly not to the average photographer.

The creation of panoramic images using conventional cameras presently involves a process of capturing a number of subject images with fixed exposure and appropriate overlap/alignment and then either cutting pieces of physical images to fit together in a panorama or doing the same thing in a photo editor. In either case it is difficult and laborious to achieve quality results.

People tend to consider the use of panoramic imaging as they stand before a stretching panorama extending vertically or horizontally, which cannot be captured with a single image. As noted traditional methods of creating a panorama require a lot of user effort and may not assure a good panoramic picture. Another problem arises in that the photographer can not be sure during the process of capturing the images whether or not the images so captured will provide the desired panorama when assembled. The user may capture images which are not suitable for creating a panorama, such as forgetting to fix the focus, not staying in the fixed plane of the panorama, failing to overlap the shots sufficiently, tilting the camera off-plane of the panorama, and so forth. When the user finally sits down to work on these images it will be too late to correct these issues by obtaining additional images.

Accordingly a need exists for a system and method of automatically generating high quality panoramic images without user effort. These needs and others are met within the present invention, which overcomes the deficiencies of previously developed panoramic techniques.

### BRIEF SUMMARY OF THE INVENTION

The present invention is a camera and method of automatically generating panoramic images within a camera in response to the capturing of a plurality of images. One of the keys of the present invention is that the acquisition of the images by the camera is directed to the panoramic object and/or coupled to panoramic processing. The camera itself not only automatically processes subject images into a panorama but assures that sufficient overlap is obtained between sequential images being captured.

In one embodiment of the invention, once panoramic mode is selected the photographer only need hold down the shutter as they pan (e.g., vertically, or horizontally) across the subject. The camera automatically assures that the proper fixed focus is maintained across the shot, along with sufficient overlap, and assures sufficient frames. All the user has to do with the camera is to pan the image while taking the "snapshot".

This invention provides a solution for any users, from novice to expert, allowing them to create high quality panoramic pictures with little effort or no additional effort in response to a method which utilizes the combination state-of-art CMOS sensor and digital image processing techniques to directly generate panoramic images.

The following terms are generally described in relation to the specification, and are not to be interpreted toward constraining specific recitations of the specification.

The term "pan" as recited herein applies to the process of moving the camera across the spatial extent of the desired image to be captured, whether that arises in response to a horizontal motion (traditional pan) or vertical motion (traditional tilt), or a combination of vertical and horizontal motion.

The term "register" has numerous definitions, and as recited herein describes the detection or estimation of camera motion as "registering camera motion", and is also used in describing the alignment of adjacent images in creating the panorama. It should be appreciated that in the image processing arts the term "register" is often used more restrictively to connote only image registration processes.

The invention is amenable to being embodied in a number of ways, including but not limited to the following descriptions.

One embodiment of the invention is an apparatus for capturing panoramic images, comprising: (a) means for capturing a sequence of (still, video, or combination of still and video) digital images (e.g., at least one imager and focus control) while panning the camera in any desired direction or combination of directions; (b) a computer with memory coupled to the computer; and (b)(i) programming adapted for execution on the computer for, (b)(ii) capturing image frames within a sequence of pair-wise overlapping image frames as the camera is panned across a desired panoramic view to be captured in a panoramic image, (b)(iii) registering (detecting/estimating) panning motion, (b)(iv) controlling the capture of each sequential frame within the sequence of pair-wise overlapping image frames in response to detected panning motion to assure proper pair-wise overlap without gaps between the image frames, and optionally selecting a subset of overlapping image frames as desired, and (b)(v) combining the sequence of pair-wise overlapping image frames to create the panoramic still photograph for output by the camera.

It should be noted that the panoramic image extends further in at least one dimension (e.g., horizontal, vertical, diagonal, arbitrary, 2D (vertical and horizontal area), and so forth) than a conventional, non-panoramic, image captured by the apparatus. Thus, the panoramic image can span any desired spatial area of a subject.

Panoramic images can be created without the user fussing with getting a proper image or performing a manual stitching and blending operation, as the apparatus can perform all of these steps automatically. Panoramic output can be generated in any desired format for communicating data to an external electronic device configured for printing, storing and/or communicating the data.

The apparatus according to the present invention can support any desired user interface which is adapted to allow the user to select panoramic image capture, and optionally select characteristics for altering the capture and image combining process.

Registration of panning motion within the apparatus can be performed in response to optical sensing, physical motion sensing, or a combination thereof.

When combining the images, programming corrects pixels at the interface between adjacent images, thus blending the images to reduce any appearance of a "seam".

Super-resolution processing techniques can be utilized on image frames, prior to or after creation of one or more panoramic images to enhance resolution of the results.

One embodiment of the invention is a camera configured for automatically creating panoramic still images in response to panning a desired subject, comprising: (a) an electronic imaging element within a camera adapted for capturing a sequence of digital images; (b) a computer with memory coupled to the computer, the computer configured for controlling the electronic imaging element of the camera; and (c) programming adapted for execution on the computer for, (c)(i) capturing a sequence of pair-wise overlapping image frames within the electronic imaging element as the camera is panned across a desired panoramic view to be captured in a panoramic image, (c)(ii) controlling image frame overlap during capture, or selecting a set of sequential overlapping image frames, in response to detecting panning motion to assure proper pair-wise overlap without gaps arising between image frames, and (c)(iii) combining the set of sequential overlapping image frames to create the panoramic still photograph for output by the camera.

One embodiment of the invention is a method of automatically capturing a panoramic still photograph within a camera, comprising: (a) capturing a sequence of images spanning a desired subject area being panned; (b) assuring that the edges of adjacent images in the sequence overlap one another in response to capturing sufficient images based on camera motion as the desired subject area is being panned; (c) combining the sequence of images to create at least one panoramic still photographic image.

The present invention provides a number of beneficial aspects which can be implemented either separately or in any desired combination without departing from the present teachings.

An aspect of the invention is a method and apparatus for automatically creating panoramic images in response to combining a plurality of images captured during panning while in a panoramic mode.

Another aspect of the invention is that it allows panoramic images to be automatically created in response to collection of a sufficient number of image frames which span a desired subject area.

Another aspect of the invention is to allow average "point-and-shoot" photographers to create desired panoramic effects.

Another aspect of the invention is to allow photographers to create panoramic image results without the need of additional equipment or process steps.

Another aspect of the invention is the ability to create panoramic images without the need of highly precise camera equipment and control mechanisms.

Another aspect of the invention is that it allows the photographer to create a panoramic image with the camera assuring a proper overlap of adjacent images.

Another aspect of the invention is a method that can be integrated within digital still and/or video camera devices.

A still further aspect of the invention is that it can be applied to numerous forms of image collecting and processing devices.

Further aspects of the invention will be brought out in the following portions of the specification, wherein the detailed description is for the purpose of fully disclosing preferred embodiments of the invention without placing limitations thereon.

### BRIEF DESCRIPTION OF THE SEVERAL VIEWS OF THE DRAWING(S)

The invention will be more fully understood by reference to the following drawings which are for illustrative purposes only:
FIG. 1 is a flow diagram of general steps for automatically generating panoramic images according to an embodiment of the present invention.
FIG. 2 is a flow diagram of steps for automatically generating panoramic images in response to still and video image capture according to an embodiment of the present invention.
FIG. 3 is a flow diagram of steps for automatically generating panoramic images in response to video image capture and super-resolution techniques according to an embodiment of the present invention.
FIG. 4 is a flow diagram of steps for automatically generating panoramic images in response to still and video image capture and super-resolution up-scaling techniques according to an embodiment of the present invention.
FIG. 5 is a block diagram of a camera device configured for generating panoramic images according to an aspect of the present invention.
FIG. 6-8 are images depicting the capturing and combining of images into a panoramic image according to an aspect of the present invention.
FIG. 9-10 are images of the San Francisco bay area comparing native image capture in FIG. 9 with a panoramic image (shown compressed to fit the page width) generated according to the present invention in FIG. 10.
FIG. 11-12 are images of the Coit Tower in San Francisco comparing native image capture in FIG. 11 with a vertical panoramic image (shown compressed to fit the page area) generated according to the present invention in FIG. 12.

### DETAILED DESCRIPTION OF THE INVENTION

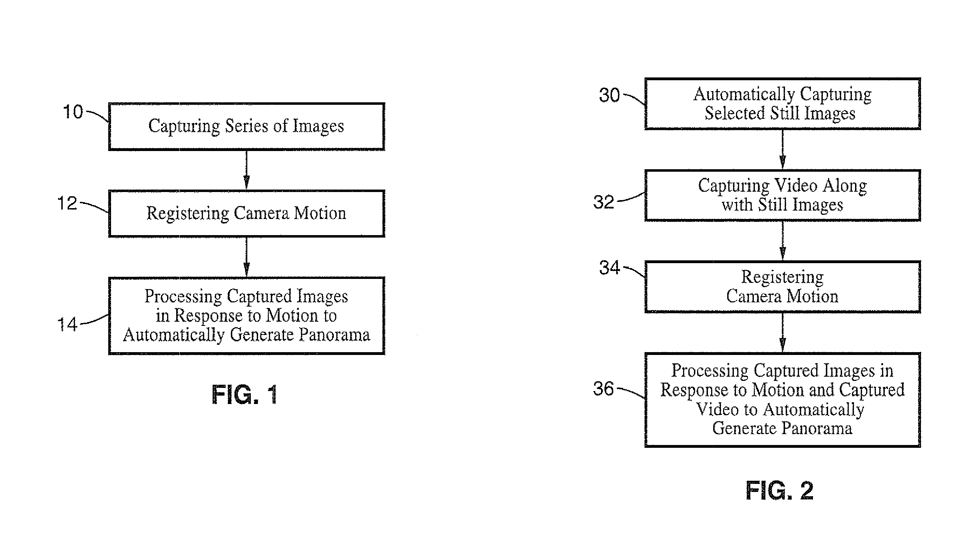

Referring more specifically to the drawings, for illustrative purposes the present invention is embodied in the apparatus generally shown in FIG. 1 through FIG. 12. It will be appreciated that the apparatus may vary as to configuration and as to details of the parts, and that the method may vary as to the specific steps and sequence, without departing from the basic concepts as disclosed herein.

### 1. Introduction.

A camera apparatus according to the present invention utilizes advanced digital image sensing (e.g., CMOS image sensors), and advanced computational chips in cameras that provide sufficient processing power for performing advanced image processing to generate panoramic images. The camera allows even novice photographers to create a panoramic photographic image spanning any desired area of the subject. The method of creating the panorama applies multi-frame processing to go beyond the limitations of existing digital cameras to provide automated capture and processing so that panoramic images can be output.

FIG. 1 illustrates an example embodiment of automatically generating panoramic images from a camera apparatus. A series of images is captured in block 10 as the camera is panned across the desired subject of the panorama. As per block 12, the motion of the camera is registered/determined. In a preferred embodiment the sequence of images in block 10 are captured in response to registering/determining camera motion, to assure that adjacent shots have sufficient overlapping for use as input in generating the panoramic image. Alternatively, with sufficient overlap otherwise assured, such as high framing rate, the camera motion can be registered/determined for use in determining a subset of images to be used in the panorama, and/or for otherwise controlling how the images are combined into panoramic image output. It should be appreciated that the amount of optimal overlap of the images depends on the method utilized in stitching the images together, and the use of optional aspects of capture, such as super-resolution, wherein the overlapping image may be utilized to enhance resolution of the resultant image. Illustrated in block 14, the sequence of captured images is combined to generate a panoramic still extending beyond any of the separate captured images. During the combination process the seam between images is blended toward minimizing the visibility of the seam.

Prior to combining the images from the input image sequence, it is preferred in some cases that the programming of the invention compensate for non-panning motion and/or tilting prior to combining the set of sequential images into said panoramic image. For example algorithms can be executed to reduce the introduction of camera shake into the panorama, such as by correcting images or eliminating selected captures if sufficient other images exist from which to generate the panorama, If a rectangular panorama is to be created then portions of the input images can be cropped prior to combination of the images. This image cropping can be according to any desired shape, for example according to lens geometry, and so forth. It should be appreciated that any form of preprocessing and combination thereof can be additionally performed without departing from the teachings of the present invention.

By way of example and not limitation, one of the methods for "stitching together", or combining, the overlapping images frames is by a matching and blending process having the following general steps. (1) Matching the overlapping portion of a first frame with the second frame, toward optimizing some matching criterion in the overlapped area (e.g., minimizing pixel error) . Some examples include the following: minimizing mean-squared or mean-absolute error; maximizing cross correlation, normalized cross correlation or phase correlation; estimating the optical flow between the images; fitting a parameterized global model to the results of matching according to the aforementioned criteria; or applying the optical flow equations constrained according to a desired global model. It should be appreciated that one or more of the frames may be adjusted in size or lighting and so forth toward assuring a proper match. It will be noted that the positioning of the overlap takes into account off-axis displacements, such as vertical displacements or rotation in a horizontal panoramic pan, to assure matching. (2) Blending of the pixel areas on one or both sides of the "seam" to assure no visible discontinuity. Preferably, the blending process includes a random error diffusion so as to further obscure the area of the seam. Alternatively, the blending process can optimize various image criteria near the seams, such as smoothness or similarity in gradients with the input images. It will be appreciated by one of ordinary skill in the art that a number of techniques can be utilized for blending pixels without departing from the teachings of the present invention.

The motion of the camera can be registered, such as detecting motion and the rate of that motion, in a number of different ways without departing from the present invention. In at least one implementation, sequential image frames are compared to determine the amount of overlap and thus the relative camera motion for the panorama. In one variant, a low resolution image sensor or a low resolution mode of the normal image sensor, is utilized for quickly obtaining sufficient detail to ascertain a pan distance between frames, such as by determining how much matching exists, and thus overlap, between frames. In at least one other embodiment, the motion of the camera is physically registered, such as in response to an acceleration sensor temporally processed to estimate camera motion in any desired axis of motion. Alternatively, gravimeter, inertial sensing, and so forth may be used such as in combination with motion analysis software so that images are captured for the panorama based on the panning speed of camera. Use of physical sensing allows for optimizing the image collection rate for a given panning rate. In other embodiments a combination of physical motion sensing and optical sensing are used for determining camera motion.

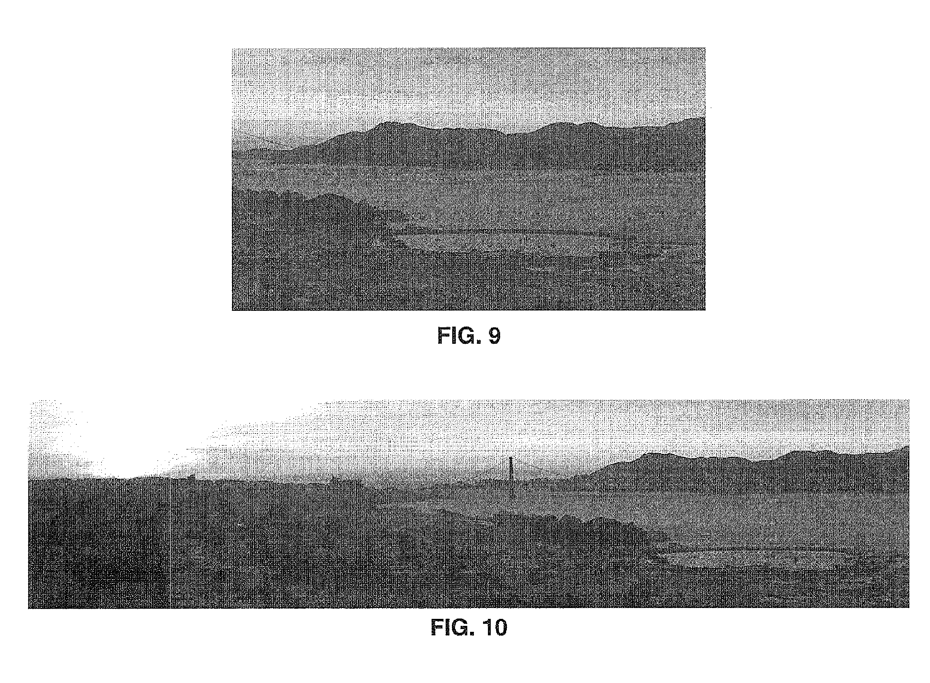

In one mode of the invention the apparatus provides the user with options for controlling how the images are combined, and/or cropped. In one mode the user can select rectangular format (or otherwise set pan limits to horizontal and/or vertical) in which the programming combines the images in a horizontal or vertical direction and automatically crops away image portions that would lie outside of a resultant rectangular viewing area (e.g., producing an image shaped as in FIG. 10). One mode of the apparatus supports a free-form set of panning, in which the images are combined following any desired path that the user traversed during panning. It will be appreciated that a simple embodiment of the present invention may limit the number of options for the user so as to keep the panoramic image capture process simple. However, it should be appreciated that the present invention can be extended in a number of different ways without departing from the teachings of the present invention.

If sufficient image overlap is provided in the series of images, then the programming can elect to eliminate one or more captured images from the sequence of images, such as those which suffer from one or more image "issues". For example these issues may include the shaky hand of the photographer so that one or more of the images exhibit more blur than the other images. Other artifacts may show up during a set of images, such as a camera flash in the field of view, a bug flitting across the image sensor, and other anomalies which would adversely impact the quality of the resultant panorama.

It should also be appreciated that the teachings of the present invention can provide for generating a panoramic image spanning any arbitrary direction or path. For example, embodiments of the present invention can be configured to generate a panoramic image in response to the user holding the shutter down while circumscribing a serpentine pattern (e.g., S-shaped). In one mode of the invention the camera can even allow the user to intentionally tilt the camera during image panning to provide a mosaic tiling effect which is popular in certain instances.

In an advanced embodiment, the technique herein allows the user to even capture both vertical and horizontal panorama, such as to effectively increase camera resolution, For example a geologist wanting to examine strata at a site could select a panoramic mode and then pan left to right, then down, and right to left, and down, then back left to right, and so forth in any pattern effective toward covering a given area. The camera according to the present invention can provide a very large (high resolution) still which spans the subject and allows the user to magnify these as desired to view the minor details.

In one embodiment, a mode is provided that allows the user to select a tiled panoramic output. For example, in the above instance the huge area panorama created could be very unwieldy (e.g., > 20-1000 MB) for transferring, viewing and so forth. A tiling mode thus allows the user to select a tiled mode in which the image is divided into images of a selected size which fit perfectly with another, because they are tiled after the panorama is generated. Programming in one or more embodiments allows the user to output a scaled down panorama, (e.g., fitting one normal image space) such as for previewing the panorama or for categorizing purposes. In one aspect, the scaled down panorama is output with an overlying grid in which the position of each of the underlying images is shown, with or without indicia (e.g., file name).

### 2. User Interface.

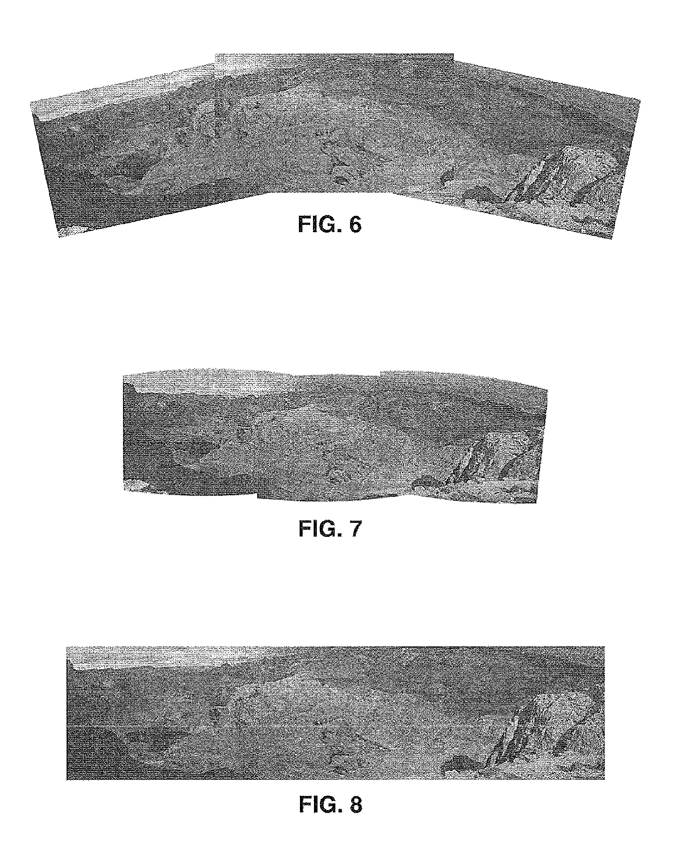

Embodiments of the present invention can be configured to generate the panoramic images in response to the use of many different user interface configurations. In one very basic configuration, the user simply selects panoramic mode, such as through pushing a button or moving a selector, then holds the shutter down as they pan the desired area from which a panoramic image is to be produced. More sophisticated user interfaces allow the user to select aspects of how the capturing is to be performed, the tradeoffs between image resolution and frequency of capture, the amount of stitching to be performed (e.g., ratio of shot overlap), the blending methods and parameters for seamlessly blending the images together (or selecting to allow the seams to be seen, as desired), whether correction of tilt is to be performed (e.g., seen going from FIG. 6 input to FIG. 8 result), the use of super-resolution, the maximum output size of a panorama, and variations and combinations thereof. One of ordinary skill in the art will appreciate these characteristics can be varied and combined with other camera control aspects as well, without departing from the teachings of the present invention.

Embodiments of the present invention can also provide a choice of panoramic image outputs to the user. In one mode the user is shown a series of panoramic images created from the same input image sequence. In another mode, the user is shown one panoramic image and can select that the camera show them additional constructions of the panorama. As there exist different ways of cropping, blending and altering resolutions, these mechanisms give the user a set of automated choices. The user can elect to save one or more of these results, which are generated from the same sequence of images. In at least one implementation, advanced controls allow the user to specify a priority on how the different panoramic forms are to be presented for their selection, or whether they want that feature activated at all.

### 3. Additional Panoramic Embodiments.

FIG. 2 illustrates an example embodiment directed at automatically generating panoramic images in response to still and video image capture. In this embodiment video is captured along with still images for use in the panorama. Preferably, the still image capture 30 is performed at a higher resolution than the video capture 32, although the same image sensor may be utilized, such as in a higher resolution mode. The video capture in this embodiment is utilized to aid in capturing and/or combining the still pictures to create a high quality panoramic picture. The delays between capturing of still image frames is determined in block 34 in response to registering camera motion. Alternatively, a subset of overlapping frames can be selected from the entire set of captured frames in response to registered (detected) panning motion to assure proper pair-wise overlap without gaps arising between sequential image frames of the subset. It should be appreciated that the flowchart could also be correctly drawn with registration of camera motion 34 coupled back to block 30 to denote the motion to capture relationship.

It will be appreciated that the panning motion can be registered by utilizing a physical sensor, by optical sensing, or a combination thereof. It should be appreciated that in this embodiment the video frames may be analyzed to determine the panning motion since the prior video frame and thus the panning speed as well as the timing on when the next still image frame is to be captured. In step 36 the still image frames are combined using the video image frames to aid in stitching together the still image frames. When utilizing video frames having significant overlap, it is relatively easy to align (register) the video frames. This registration information can be accumulated for the video frames captured at times between the two still images, until the registration of the two images becomes readily available. The approximation provides initial conditions for the precise registration of the two still images, reducing registration search space and hence complexity.

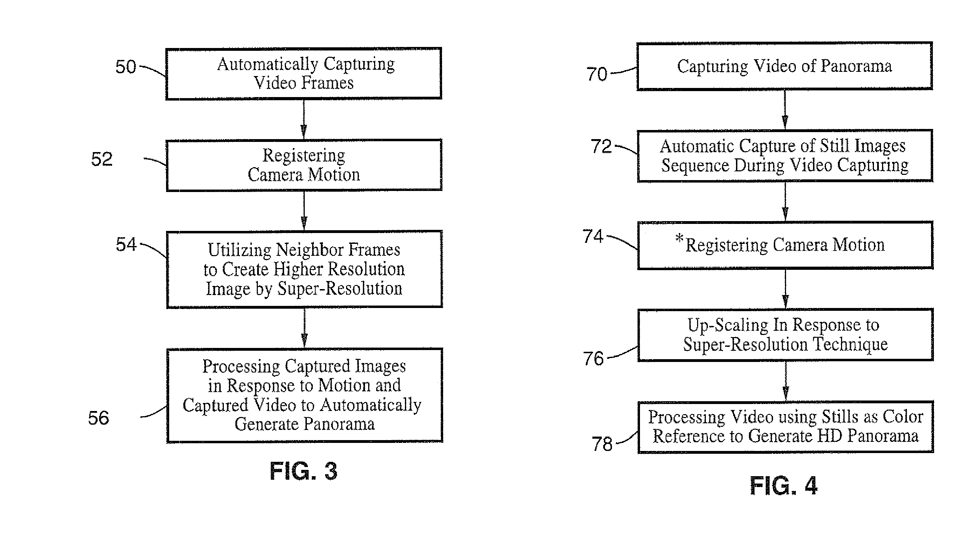

FIG. 3 illustrates an example embodiment directed at automatically generating panoramic images in response to video image capture and super-resolution techniques. Video frames 50 are captured and camera motion registered 52. As the video frames are typically of lower resolution than a still image frame, it is preferable that super-resolution techniques 54 are utilized to create a subset of overlapping frames having higher resolution than the original video frames. It is well known that super-resolution techniques allow multiple frames of a first resolution which are subject to small temporal or spatial displacements to be combined into a single frame of a second, higher, resolution. Super-resolution generated still frames are then combined 56 into the panoramic image to be output by the camera. It will be noted that similar to the method shown in FIG. 2, the original video can be utilized as a stitching guide.

Alternative embodiments of the invention also allow for multiple sets of images to be combined into multiple panoramic images which are then combined using super-resolution techniques into a final panoramic image. For example consider frames n1 through n8 collected during a single pan. Overlapping frames n1, n3, n5 and n7 are then selected as part of a first set of frames, while frames n2, n4, n6 and n8 are selected as part of a second set of frames. The first set is combined into a first panoramic still, and also the second set into a second panoramic still. Both panoramas, covering substantially the same region, are then combined using super-resolution into a single higher resolution panoramic output. One benefit of this reversed-order approach is that the super-resolution process itself provides for obscuring the seams in the separate panoramic images. It should be appreciated that this aspect may be combined with any implementation taught herein and variations thereof.

FIG. 4 is a flow diagram of steps for automatically generating high-definition panoramic video in response to still and video image capture combined with super-resolution up-scaling techniques. It should be appreciated that high definition video provides not only a higher resolution, but also extends the horizontal frame, thus being a form of frame-by-frame panorama. This embodiment of the invention is particularly applicable when the video camera used does not have an imaging device with the desired aspect ratio (e.g., sufficient width).

It should be noted that the term "aspect ratio" refers to the width of a picture (or screen) in relation to its height. Ratios are typically expressed in the form "width x height". For example, a 4x3 (more commonly expressed 4:3) ratio means the picture is 4 units wide by 3 units high. Actual physical size (number of pixels) of the picture is irrelevant for aspect ratio calculation, as the aspect ratio refers only to the relationship between width and height. A 4:3 ratio is commonly referred to as a standard definition capture, while a 16:9 ratio is typically referred to today as the format for so-called "High-Definition". Other "panoramic" video formats also exist, such as "Cinemascope"® which has a 21:9 format. It will be appreciated that the ability to extend the frame in any desired direction by the present invention can be utilized to upscale from any smaller format to any larger format, such as from 4:3 → 16:9, or from 16:9 → 21:9, and so forth without limitation.

In this method a video is captured 70 as the base for the video panorama. Preferably, high resolution panoramic still pictures are captured 72 (e.g., periodically and/or triggered by camera or subject motion) while the video is being captured. It is preferred that at least two still images be captured during a video segment. Camera motion is again preferably registered 74 for aiding in determining when to capture the still images. Adjacent video frames are then combined using super-resolution up-scaling (or digital zoom) techniques 76 to extend the resolution of the video frames. Generated high resolution video frames are then combined as per block 78 into panoramic video frames which are wider (or taller as may be desired in select applications) than the original video frames. Still images can be utilized in this method during both the up-scaling process and for guiding the stitching process during combination of the video frames generated in response to super-resolution techniques. Although this embodiment could be implemented within the camera itself, the high processing overhead required of a video sequence lends itself more particularly to offline processing as guided by the collected video and still frames, as well as the optional motion information.

### 4. Camera Hardware.

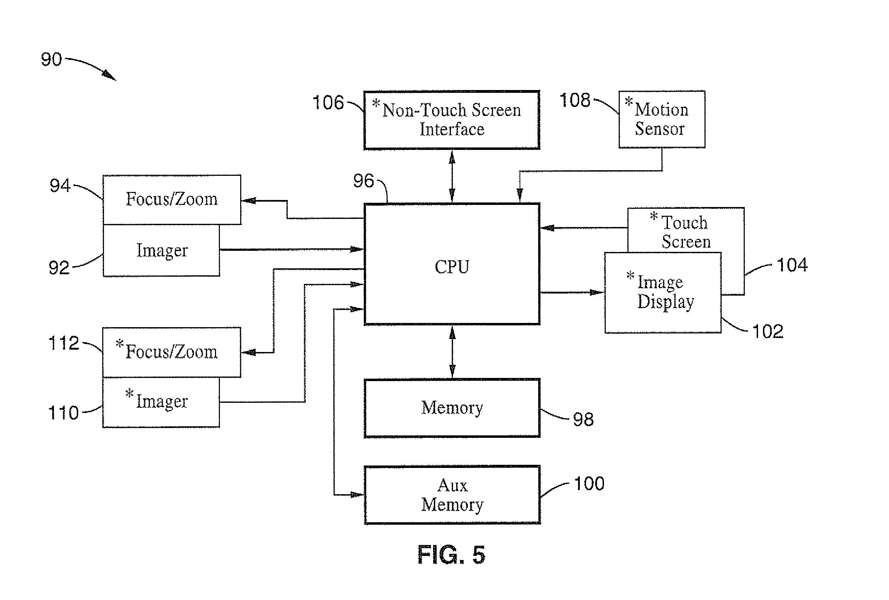

FIG. 5 illustrates an example embodiment 90 of an apparatus configured for generating panoramic images according to the invention. In the figure an image capture device (camera) is shown configured for automatically generating panoramic images according to the invention. A focus/zoom control 94 is shown coupled to imaging optics 92 as controlled by a computer (CPU) 96. Computer 96 controls the camera and performs the panorama generation method in response to instructions executed from memory 98 and/or auxiliary memory 100. Shown by way of example for a camera device (e.g., video and/or still) are an optional image display 102, optional touch screen 104, and optional non-touch screen 106. Not shown in the diagram are wired and/or wireless communication ports, memory card slots and so forth, any number of which can be supported.

In addition, an optional motion sensor 108 is shown, by which panning motion can be registered (detected). Motion sensor 106 may comprise an optical sensor or physical sensor (e.g., inertia, acceleration, etc.), although the image sensor utilized for collecting video and/or still images may be utilized.

An optional second imaging system comprising imager 110 and focus/zoom 112 are shown by way of example, so as to allow certain applications to collect the video and still frames using different imaging devices. This has the benefit of maximizing framing rates of video and still image capture as the functions are not sharing a single capture element. However, it should be appreciated that the video and still image output can be collected from the same imager, such as in response to use of different modes of operation that allow selecting either video or still frames. In at least one implementation, the difference between the video and still frames are the resolution, although the aspect ratio and other characteristics may be different.

The above figure is shown by way of example and not limitation. It should be appreciated that the method according to the present invention can be implemented on various image capture and processing devices which are configured for capturing/receiving a sequence of images and generating panoramic output. The invention is not directed to processing of MPEG videos and its associated motion vector processing. The method is preferably implemented on the imaging device itself, although it may be implemented in post processing, such as in generating a panoramic video output. The present invention can be implemented in hardware and/or software, depending on the target system. It should be appreciated that the invention can be implemented as software on any camera or system which provides the requisite optics and sufficient processing power.

Panoramic images may be displayed on an image display of the apparatus (or printed) and/or output from the apparatus in any desired format, including still image file formats, video formats, data formats, native storage formats, and the like.

### 5. Examples of Panoramic Image Output.

FIG. 6 through FIG. 8 illustrate the process of automatically capturing, adjusting and combining a series of images captured during panning. These images simulate the process, although they were collected conventionally for illustrative purposes. In FIG. 6 a representation is shown of capturing three images of the Grand Canyon in Arizona. It should be appreciated that these images are intentionally shown significantly out of alignment, which is an aspect that is automatically overcome by the present invention. It should also be noted that the programming of the present invention establishes the timing of image capture to assure that images captured, such as in FIG. 6, are properly overlapped. It will be noted that tilted (off pan axis) images require more image overlap than images captured on a closer axis, such as horizontal. In FIG. 7 the images have been cropped to a pattern to simplify stitching them together in combination. In FIG. 8 the image have been combined with the pixel interface between adjacent images having been blended automatically so that the seams between the frames are not evident.

FIG. 9 and FIG. 10 illustrate a video or still image of San Francisco bay. In FIG. 9 is shown a single image captured by the imaging device. A series such images automatically captured by the present invention during panning is combined to form the panoramic image of FIG. 10. Due to the limitations of lens and imager, the camera which captured the image of FIG. 9 requires the capturing of several images to cover the whole view. According to the present invention, the user only needs to pan the camera horizontally, wherein the camera apparatus automatically generates the panoramic picture.

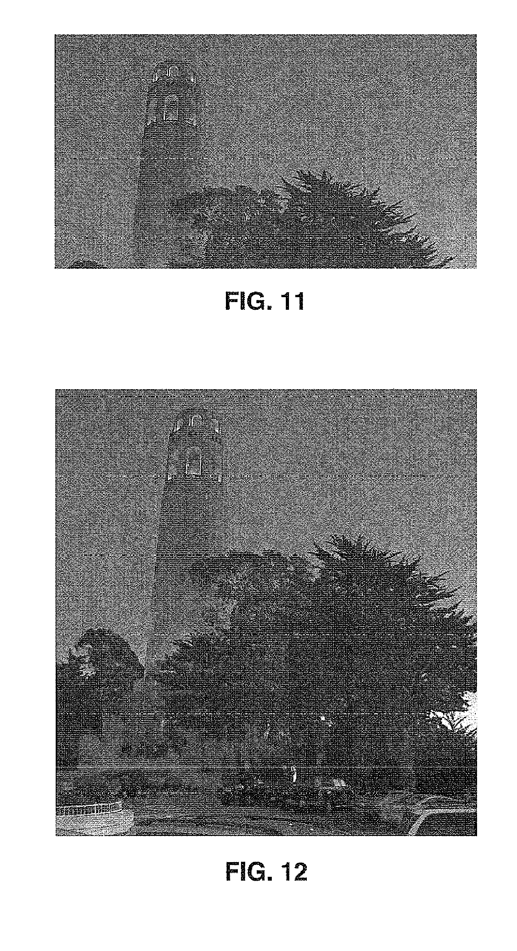

FIG. 11 and FIG. 12 depict a comparison between a single video or still image of the Coit Tower (Telegraph Hill in San Francisco) in comparison with a panoramic image generated according to the present invention. In the scene shown an original video frame of 1440x1080 pixels is shown (resized here for easy display): To properly capture this image the camera was panned vertically covering the extent of the tower while collecting frames of the video. Processing according to the present invention provided for the capture and combining of these captured frames into the vertical panorama shown in FIG. 12. It will be appreciated that the present invention allows the camera according to the invention to readily capture a vertical panorama, such as cover the span of this tall building, in response to simply panning the camera vertically and allowing the camera to automatically do all the work.

### 6. Combining Panoramic Images with other Image Techniques.

Panoramic image techniques taught herein may be utilized in combination with other image processing techniques.

In one variation, the panoramic image techniques taught herein may be utilized in combination with simulated long exposure methods taught elsewhere by the Applicant. In combining these techniques panoramic images may be generated within the camera, or in response to automated post-processing, which also simulate long exposures, producing either still images or video frames as output. It will be appreciated that both panoramic processing and simulation of long exposures can be facilitated in response to obtaining a sufficient number of images while panning the camera, or by using the dual (still-video) image capture techniques.

### 7. Conclusion.

The present invention provides methods and apparatus for automatically generating panoramic images in response to the input of a sequence of overlapping images captured during panning. Inventive teachings can be applied in a variety of apparatus and applications, including cameras (still and/or video), video processing equipment and software, video playback devices, and so forth.

As can be seen, therefore, the present invention includes the following inventive embodiments among others:
1. An apparatus for capturing panoramic images, comprising:
   (a) means for capturing a sequence of digital images;
   (b) a computer with memory coupled to said computer; and
   (c) programming adapted for execution on said computer for,
      (i) capturing image frames within a sequence of pair-wise overlapping image frames as said camera is panned across a desired panoramic view to be captured in a panoramic image,
      (ii) registering panning motion,
      (iii) controlling capture of sequential frames within said sequence of pair-wise overlapping image frames in response to registered panning motion to assure proper pair-wise overlap without gaps arising between said image frames, and
      (iv) combining said sequence of pair-wise overlapping image frames to create a panoramic still photograph for output by said camera.
2. An apparatus as recited in embodiment 1, wherein said panoramic image extends further in at least one dimension than a conventional, non-panoramic, image captured by said apparatus.
3. An apparatus as recited in embodiment 1, wherein said panoramic image can span any desired spatial area of a subject.
4. An apparatus as recited in embodiment 1, wherein panoramic images are created by said apparatus without need of externally processing a set of images captured by said apparatus.
5. An apparatus as recited in embodiment 1, wherein said means comprises;
   an imager configured for electronically capturing images; and
   a focus control adapted for controlling focal length of images captured by said imager.
6. An apparatus as recited in embodiment 1, further comprising programming for selecting a set of sequential overlapping image frames from within said sequence of pair-wise overlapping image frames for being combined.
7. An apparatus as recited in embodiment 1, further comprising a user interface adapted to allow a user to select a panoramic image capture mode.
8. An apparatus as recited in embodiment 1, wherein said panning motion is registered in response to optical sensing.
9. An apparatus as recited in embodiment 1, further comprising a motion sensor whose output is used by said programming for registering panning motion.
10. An apparatus as recited in embodiment 1, further comprising programming for compensating for non-panning motion and/or tilting prior to combining said sequence of pair-wise overlapping image frames into said panoramic image
11. An apparatus as recited in embodiment 1, wherein said sequence of pair-wise overlapping image frames comprise frames of a video sequence.
12. An apparatus as recited in embodiment 1, wherein the panoramic output of said apparatus comprises panoramic digital photographs.
13. An apparatus as recited in embodiment 1:
   wherein the panoramic output of said apparatus comprises panoramic digital photographs; and
   wherein said apparatus is configured for communicating data for said panoramic digital photographs to an external electronic device configured for printing, storing and/or communicating said data.
14. An apparatus as recited in embodiment 1, further comprising programming for correcting pixel interfacing between pair-wise overlapping image frames after combining said sequence of pair-wise overlapping image frames.
15. An apparatus as recited in embodiment 1, further comprising programming for performing super-resolution techniques on image frames to enhance resolution.
16. A camera configured for automatically creating panoramic still images in response to panning a desired subject, comprising:
   (a) an electronic imaging element within a camera adapted for capturing digital images;
   (b) a computer with memory coupled to said computer, said computer configured for controlling said electronic imaging element of said camera; and
   (c) programming adapted for execution on said computer for,
      (i) capturing a sequence of pair-wise overlapping image frames within said electronic imaging element as said camera is panned across a desired panoramic view to be captured in a panoramic image,
      (ii) controlling image frame overlap during capture, or selecting a subset from the pair-wise overlapping image frames, in response to registering panning motion to assure proper pair-wise overlap without gaps arising between said image frame, and
      (iii) combining the set of sequential pair-wise overlapping image frames to create a panoramic still photograph for output by said camera.
17. An apparatus as recited in embodiment 16, further comprising programming for correcting pixel interfacing to create a smooth seamless blend of the sequence of pair-wise overlapping image frames after combining said sequence of images.
18. An apparatus as recited in embodiment 16, further comprising programming for performing super-resolution techniques on image frames to enhance resolution.
19. A method of automatically capturing a panoramic still photograph within a camera, comprising:
   capturing a sequence of images spanning a desired subject area being panned;
   assuring that edges of adjacent images in the sequence of images overlap one another in response to capturing sufficient images based on camera motion as a desired subject area is being panned; and
   combining the sequence of images to create at least one panoramic still photographic image.
20. A method as recited in embodiment 19, further comprising executing one or more super-resolution techniques on image frames to enhance resolution.
21. An apparatus for capturing panoramic images, comprising:
   (a) means for capturing a sequence of digital images;
   (b) a computer with memory coupled to said computer; and
   (c) programming adapted for execution on said computer for,
      (i) capturing image frames within a sequence of pair-wise overlapping image frames as said camera is panned across a desired panoramic view to be captured in a panoramic image,
      (ii) registering panning motion,
      (iii) controlling capture of sequential frames within said sequence of pair-wise overlapping image frames in response to registered panning motion to assure proper pair-wise overlap without gaps arising between said image frames, and
      (iv) combining said sequence of pair-wise overlapping image frames to create a panoramic still photograph for output by said camera.
22. An apparatus as recited in embodiment 21, wherein said sequence of pair-wise overlapping image frames comprise frames of a video sequence.
23. An apparatus as recited in embodiment 21, wherein the panoramic output of said apparatus comprises panoramic digital photographs.
24. An apparatus as recited in embodiment 21:
   wherein the panoramic output of said apparatus comprises panoramic digital photographs; and
      wherein said apparatus is configured for communicating data for said panoramic digital photographs to an external electronic device configured for printing, storing and/or communicating said data.
25. An apparatus as recited in embodiment 21, further comprising programming for correcting pixel interfacing between pair-wise overlapping image frames after combining said sequence of pair-wise overlapping image frames.
26. An apparatus as recited in embodiment 21, further comprising programming for performing super-resolution techniques on image frames to enhance resolution.

Although the description above contains many details, these should not be construed as limiting the scope of the invention but as merely providing illustrations of some of the presently preferred embodiments of this invention. Therefore, it will be appreciated that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more." All structural and functional equivalents to the elements of the above-described preferred embodiment that are known to those of ordinary skill in the art are expressly incorporated herein by reference and are intended to be encompassed by the present claims. Moreover, it is not necessary for a device or method to address each and every problem sought to be solved by the present invention, for it to be encompassed by the present claims. Furthermore, no element, component, or method step in the present disclosure is intended to be dedicated to the public regardless of whether the element, component, or method step is explicitly recited in the claims.

## Claims

1. An apparatus for capturing panoramic images, comprising:
(a) means for capturing a sequence of digital images;
(b) a computer with memory coupled to said computer; and
(c) programming adapted for execution on said computer for,
(i) capturing image frames within a sequence of pair-wise overlapping image frames as said camera is panned across a desired panoramic view to be captured in a panoramic image,
(ii) registering panning motion,
(iii) controlling capture of sequential frames within said sequence of pair-wise overlapping image frames in response to registered panning motion to assure proper pair-wise overlap without gaps arising between said image frames, and
(iv) combining said sequence of pair-wise overlapping image frames to create a panoramic still photograph for output by said camera.

2. An apparatus as recited in claim 1, wherein said panoramic image extends further in at least one dimension than a conventional, non-panoramic, image captured by said apparatus.

3. An apparatus as recited in claim 1, wherein said panoramic image can span any desired spatial area of a subject.

4. An apparatus as recited in claim 1, wherein panoramic images are created by said apparatus without need of externally processing a set of images captured by said apparatus.

5. An apparatus as recited in claim 1, wherein said means comprises:
an imager configured for electronically capturing images; and
a focus control adapted for controlling focal length of images captured by said imager.

6. An apparatus as recited in claim 1, further comprising programming for selecting a set of sequential overlapping image frames from within said sequence of pair-wise overlapping image frames for being combined.

7. An apparatus as recited in claim 1, further comprising a user interface adapted to allow a user to select a panoramic image capture mode.

8. An apparatus as recited in claim 1, wherein said panning motion is registered in response to optical sensing.

9. An apparatus as recited in claim 1, further comprising a motion sensor whose output is used by said programming for registering panning motion.

10. An apparatus as recited in claim 1, further comprising programming for compensating for non-panning motion and/or tilting prior to combining said sequence of pair-wise overlapping image frames into said panoramic image.

11. A camera configured for automatically creating panoramic still images in response to panning a desired subject, comprising:
an electronic imaging element within a camera adapted for capturing digital images;
a computer with memory coupled to said computer, said computer configured for controlling said electronic imaging element of said camera; and
programming adapted for execution on said computer for,
capturing a sequence of pair-wise overlapping image frames within said electronic imaging element as said camera is panned across a desired panoramic view to be captured in a panoramic image,
controlling image frame overlap during capture, or selecting a subset from the pair-wise overlapping image frames, in response to registering panning motion to assure proper pair-wise overlap without gaps arising between said image frames,
and
combining the set of sequential pair-wise overlapping image frames to create a panoramic still photograph for output by said camera.

12. An apparatus as recited in claim 11, further comprising programming for correcting pixel interfacing to create a smooth seamless blend of the sequence of pair-wise overlapping image frames after combining said sequence of images.

13. An apparatus as recited in claim 11, further comprising programming for performing super-resolution techniques on image frames to enhance resolution.

14. A method of automatically capturing a panoramic still photograph within a camera, comprising:
capturing a sequence of images spanning a desired subject area being panned;
assuring that edges of adjacent images in the sequence of images overlap one another in response to capturing sufficient images based on camera motion as a desired subject area is being panned; and
combining the sequence of images to create at least one panoramic still photographic image.

15. A method as recited in claim 14, further comprising executing one or more super-resolution techniques on image frames to enhance resolution.
